# EUROPEAN PATENT APPLICATION

(11) **EP 2 833 136 A1**
(43) Date of publication of application: **04.02.2015**
(21) Application number: 13178682.4
(22) Date of filing: 31.07.2013
(51) Int. Cl.: G01N 30/16, G01N 30/60, G01N 30/74

(54) **Opto-fluidic microsystem and method**

(71) Applicant: University College Cork, Cork City (IE)
(72) Inventor: O'Brien, Peter, Cork (IE); Ryan, Evan, Cork (IE); O'Murchu, Cian, Cork (IE)
(74) Representative: Lucey, Michael

(57) **Abstract**

The invention relates to the development of a 'fluidic injection' component or module for use with micro- and/or nano-HPLC systems. It utilises a novel optical based system to detect the small liquid sample to be injected into the HPLC separation column. The invention includes the use of an immiscible liquid, for example an oil, that is intentionally coloured or naturally fluorescent to buffer the sample on either side of the injection channel so the position of the sample can be optically or visually detected.

## Description

### Field of the Invention

The invention relates to an opto-fluidic microsystem and method. In particular the invention relates to an opto-fluidic microsystem and method suitable for use in High-performance liquid chromatography (HPLC) or Capillary Electophoresis (CE) systems.

### Background to the Invention

High-performance liquid chromatography (HPLC) is used widely to analyse chemical and biological samples. Standard HPLC systems include a separation column, sample injections system, pumping system and detection systems (UV, Mass Spectroscopy, etc.). HPLC systems are now being developed that can analyse smaller sample volumes in quicker times, enabling new applications in the field of in-line process monitoring and bio-sensing such as point-of-care diagnostics. These new systems utilise microsystems to analyse the smaller liquid volumes which can be in the order of micro- and nano-litres. Fluids are transported via micro channels with typical dimensions in the order of 10 to 100 microns. These HPLC systems contain all the necessary components that are found in a standard system (separation column, pump, injector and detector).

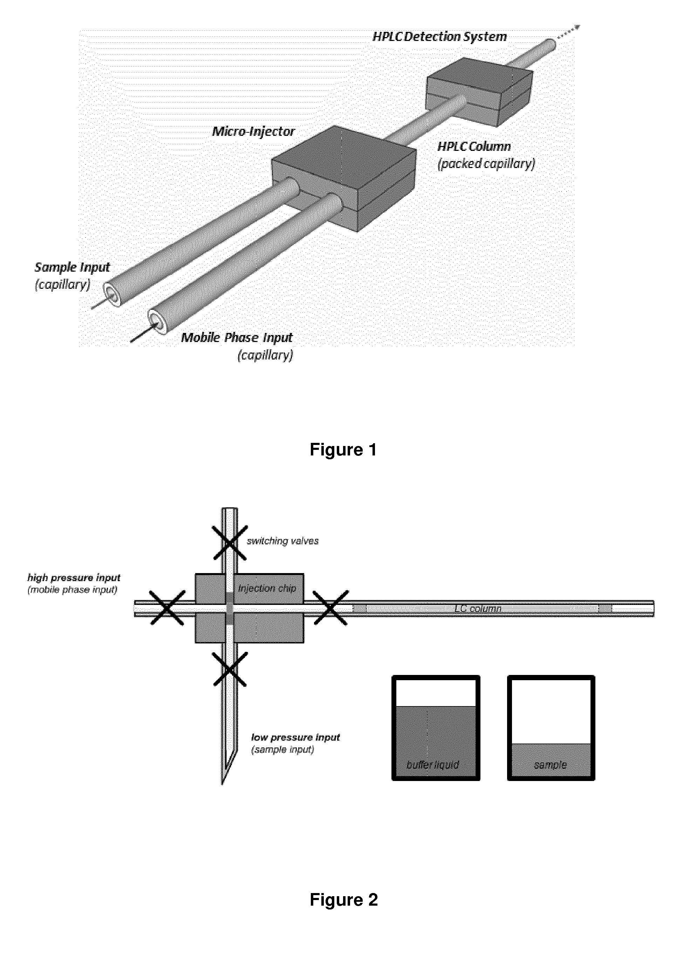

Figure 1 illustrates a general outline of a micro- or nano-HPLC system. It utilises micro-channels to transport the liquid sample and mobile phase. The micro-channels can be fabricated in silicon or glass, or fused silica capillaries. The injector is a critical component of the overall system, as it must provide an efficient and reliable means of introducing the small sample volumes into the separation column. The column is usually a packed silica capillary requires a high pressure (> 1000 psi) to drive the sample through the column.

A key component of the HPLC system is the sample injector. It must provide a reliable and efficient means of introducing the sample into the separation column. It also must be able to operate under high pressure as the sample is driven through the separation column. These conditions present a major technical challenge and become a significant problem for decreasing sample volumes. Furthermore, as the requirement increases to reduce sample volumes even further, it becomes increasingly difficult to determine exactly when the sample has been transported to the injector so it can be switched to the separation column.

It is therefore an object of the invention to provide a system and method to overcome at least one of the above mentioned problems.

### Summary of the Invention

According to the invention there is provided, as set out in the appended claims, a system for detecting properties of a sample fluid comprising
at least one channel adapted to deliver a sample fluid into a micro separation system;
a micro-injector for controlling delivery of the sample fluid; **characterised in that** the mico-injector is configured to provide a buffer fluid either side of the sample fluid; and
a sensor to detect the start and/or end of the sample fluid in the channel.

The main advantage of the invention over other technical solutions is the ability to inject smaller sample volumes into the HPLC separation column. This ability is critical where the user may only have a small sample to start with. This could be a small biological sample from a biopsy or a sample recovered from a chemical micro-reactor. The technique is based on a design that can be easily implemented, is low cost and manufacturable, and will provide the sensitivity necessary for smaller volumes.

The invention relates to the development of a 'fluidic injection' component or module for use with micro- and/or nano-HPLC systems. It utilises a novel optical based system to detect the small liquid sample to be injected into the HPLC separation column. The invention includes the use of an immiscible liquid, for example an oil, that is intentionally coloured or naturally fluorescent to buffer the sample on either side of the injection channel so the position of the sample can be optically or visually detected.

Alternatively the invention includes the use of a buffer liquid that is a different refractive index to that of the sample. It is this interface between the buffer liquid and the sample that allows for the detection of the sample in the micro-channels.

In one embodiment the sensor comprises an optical detection system.

In one embodiment the sensor determines the location of the sample fluid in the channel.

In one embodiment the buffer fluid comprises an immiscible fluid.

In one embodiment the immiscible fluid comprises a different refractive index to the sample fluid.

In one embodiment the immiscible fluid comprises a different colour or fluorescence to the sample fluid to facilitate identification of at least one end of the sample fluid.

In one embodiment the micro separation system comprises a second channel and arranged in a cross-tee configuration with the at least first channel.

In one embodiment the sensor detects when the sample fluid is position in the cross-tee section indicating that the sample fluid can be delivered into the micro separation system.

In one embodiment the micro-injector comprises a silicon or substrate and a transparent glass superstrate.

In one embodiment the superstrate is optically transparent adapted to facilitate visualisation of the liquid within the channel.

In one embodiment the channel comprises a micro-channel.

In one embodiment the micro-injector component is comprises a substrate with a plurality of micro-channels of etched silicon and a transparent superstrate.

In an alternative to the silicon and glass micro-injector, the polymer injector chip, is comprised of a microchannels drilled in Acrylic or Ultem. It will be appreciated that other suitable polymers can also be used. The injection system intersects with the separation column in a cross-tee configuration.

In one embodiment the superstrate is optically transparent to facilitate visualisation of the liquid within the micro-channel. A glass substrate can be used that is anodically bonded to the Silicon substrate to provide a high pressure liquid seal.

In one embodiment the liquid can be visualised using a vision based system (e.g. camera above the microsystem) or using a photodiode integrated directly on the glass substrate (e.g. Flip-chip integration on the glass substrate).

In one embodiment the liquid can alternatively be detected in the microchannel by an optical detection system, which is integrated into the polymer injection chip. There is one hole drilled on the top of the chip and another on the bottom of the chip to accommodate optical fibre for the integrated optical detection system.

There is also provided a computer program comprising program instructions for causing a computer program to carry out the above method which may be embodied on a record medium, carrier signal or read-only memory.

### Brief Description of the Drawings

The invention will be more clearly understood from the following description of an embodiment thereof, given by way of example only, with reference to the accompanying drawings, in which:-
Figure 1 illustrates a general outline of a micro- or nano-HPLC system;
Figure 2 illustrates a plan view of the HPLC microsystem with novel micro-injector (injection chip), according to one embodiment of the invention;
Figure 3 illustrates a micro-injector component is constructed from a substrate with micro-channels, which can be of etched silicon, and a transparent superstrate, which can be of glass;
Figure 4 illustrates bonding of silicon wafer with etched micro-channels and a transparent glass superstrate;
Figure 5 illustrates the design of the polymer based injector chip - fabricated using optically transparent Ultem and Acrylic materials;
Figure 6 illustrates a 3D representation of the polymer injector chip and a completed device with integrated optical fibre;
Figure 7 illustrates a side-view of injection system i) with photodiode integrated over glass superstrate, and ii) with camera vision system. Both detection configurations are designed to image at the injector cross-tee;
Figure 8 illustrates i) flip-chip integration of photodiode over a micro-channel, and ii) camera imaging of fluorescent buffer liquid in a 5 micron deep etched silicon micro-channel; and
Figure 9 illustrates integration of the optical detection system onto the polymer injector chip.

### Detailed Description of the Drawings

The invention provides an optofluidic system for detecting properties of a sample fluid comprising at least one channel adapted to deliver a sample fluid into a micro separation system. The channel is placed on one side of a substrate, for example a silicon substrate, while the other side of the channel is encased in a transparent superstrate, for example transparent glass. A micro-injector is used for controlling delivery of the sample fluid. The micro-injector is configured to provide a buffer fluid either side of the sample fluid. An optical sensor to detect the start and/or end of the sample fluid in the channel.

In one embodiment the invention provides a means of visualising or detecting the micro- or nano-litre sample so it can be efficiently injected into a separation column. The sample is normally a transparent liquid, so it cannot be easily visualised. However, by placing two visible (buffer) liquids that do not mix or interact with the sample, these can then provide the mechanism by which the position of the sample in the micro-channel can be determined. This enables very small sample volumes to be injected to the separation column, which until now has not been possible. Therefore, there are two main elements of the invention; 1) design of the injector, and 2) specifications of the buffer liquid. The injector design has a number of novel features. This includes a) the ability to transport small liquid volumes, b) withstand high pressures, and c) provide a means by which the sample liquid can be visualised in the micro-channel.

Design of micro-channels to transport small liquid volumes can be achieved by utilising etched silicon. The dimensions of the channels can be varied by conventional semiconductor fabrication processes. This provides a means or platform for implementing the novel features of the invention.

The silicon micro-channels are covered by bonding a glass superstrate over the silicon. A technique such as anodic bonding can be used for this process. This glass cover provides a sealed fluidic system that is capable of withstanding high pressures. The silicon micro-channels can be inter-connected with silica capillaries which are used to collect the sample and mobile phase from the preparation vessels or containers. This can be achieved by etching v-grooves into the silicon and the capillaries inserted in these grooves.

The bonded glass superstrate also provides the means by which the liquid sample and buffer liquids can be visualised. Visualisation can be achieved using a vision based systems (e.g. camera) or by integrating an optical detector (e.g. photodiode) directly over the location of the micro-injector. The latter can be achieved (for example) by using a flip-chip integration process.

A second fabrication process using polymer materials will be run as alternative to the silicon based injectors. The motivation for including this option is the ability to easily implement microchannels in polymer materials that are compatible with the Peek fittings used in conventional capillary based HPLC systems. In addition, using transparent Ultem and Acrylic polymers enables fluid flow within the channels to be monitored, thus facilitating the visualisation of the sample in the microchannel. It will be appreciated that other suitable type of polymers can be used. Novel features of the injector include a fluidic connector design suitable for high pressure connection with fused capillaries and an integrated optical fibre used to sense transit of the sample to be analysed - located directly over the cross-T structure. The polymer injectors can be machined using a conventional milling machine. The inner dimensions can be reduced if required.

The buffer liquid provides the means by which the sample (normally transparent) can be visualised or detected. The buffer liquid has three key features; a) it must not mix or interact with the sample, b) it must be able to be visualised by the detection system and c) it must have a different refractive index to that of the sample.

The sample is usually in an aqueous solution; therefore by ensuring the buffer is an organic and immiscible solution, such as oil, it will not mix with the sample.

In one embodiment the buffer liquids can be coloured with a dye or pigment to provide a means by which it can be visualised. Alternatively, a buffer liquid can be used that has a natural or auto-fluorescence which can be excited by UV light. In such a system, the excitation source could be a UV LED integrated adjacent to the photodiode.

The buffer liquid is to have a different refractive index to that of the sample. Due to the difference in refractive indexes, there is a detectable interface between the buffer liquid and the sample. It is this interface that is to be detected by the integrated optical detection system.

Figure 2 illustrates a plan view of the HPLC microsystem with a novel micro-injector (injection chip), according to one embodiment of the invention. The system provides for detecting properties of a sample fluid in the channel and adapted to deliver a sample fluid into a micro separation system. The channel is placed on one side of a substrate, for example a silicon substrate, while the other side of the channel is encased in a transparent superstrate, for example transparent glass. The sample is buffered by an immiscible liquid which can be easily optically detected - the buffer liquid can be intentionally coloured or have a natural fluorescence. Using this technique the position of the sample in the cross-tee injector can be determined and valves (marked X) can be sequentially switched to introduce the sample into the separation channel. The micro-injector can be used to introduce small liquid sample volumes (nano-litres) into a variety of chemical separation systems; e.g. HPLC (liquid chromatography) or CE (capillary electrophoresis) systems. The sample and buffer liquid micro-channel are operated under atmospheric pressure, while the separation micro-channel containing the mobile phase is operated under high pressure, typically in the range 1,000 to 10,000 psi.

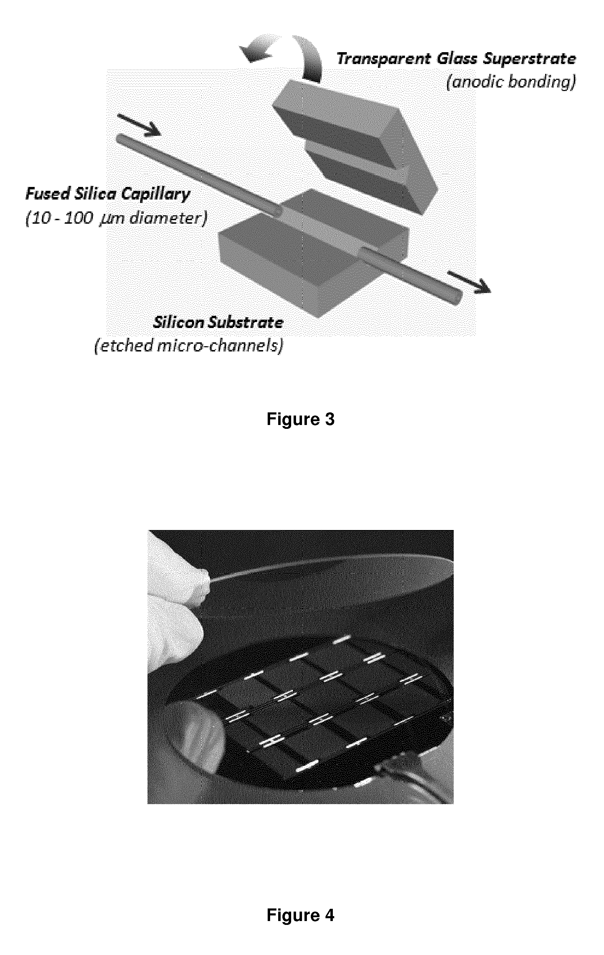

Figure 3 illustrates a micro-injector component constructed from a substrate with micro-channels, which can be of etched silicon, and a transparent superstrate, which can be of glass. The substrate and superstrate can be anodically bonded to provide a physically robust joint capable of withstanding high pressures. The input and output micro-fluidic connections can be of fused silica capillaries with typical inner diameters in the range 10 to 100 microns.

Figure 4 illustrates the bonding of silicon wafer with etched micro-channels and a transparent glass superstrate. The materials can be anodically bonded to provide a physically robust joint that can withstand the high pressures necessary for liquid chromatography.

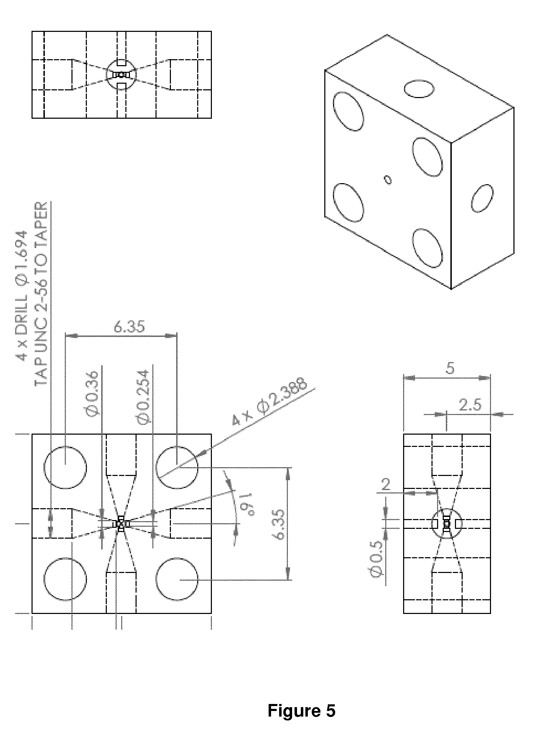

Figure 5 illustrates a design of the polymer based injector chip fabricated using optically transparent Ultem and Acrylic materials, according to one embodiment.

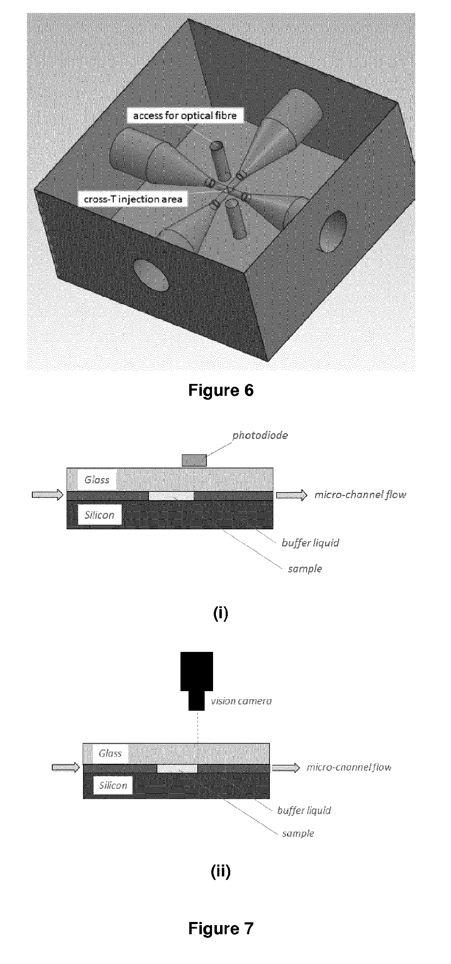

Figure 6 illustrates a 3D representation of the polymer injector chip and a completed device with integrated optical fibre. In one embodiment the inner channel dimensions are 250 microns and the optical fibre core is 200 microns, although it will be appreciated that other fittings can be used. High pressure fluidic connections are achieved using standard Peek fittings.

Figure 7 illustrates a side-view of injection system i) with photodiode integrated over glass superstrate, and ii) with camera vision system. Both detection configurations are designed to image at the injector cross-tee. In both designs, the optically visible buffer liquid is easily detected and pin-points the edge of the sample. This determines precisely when the transparent sample is to be injected into the separation column.

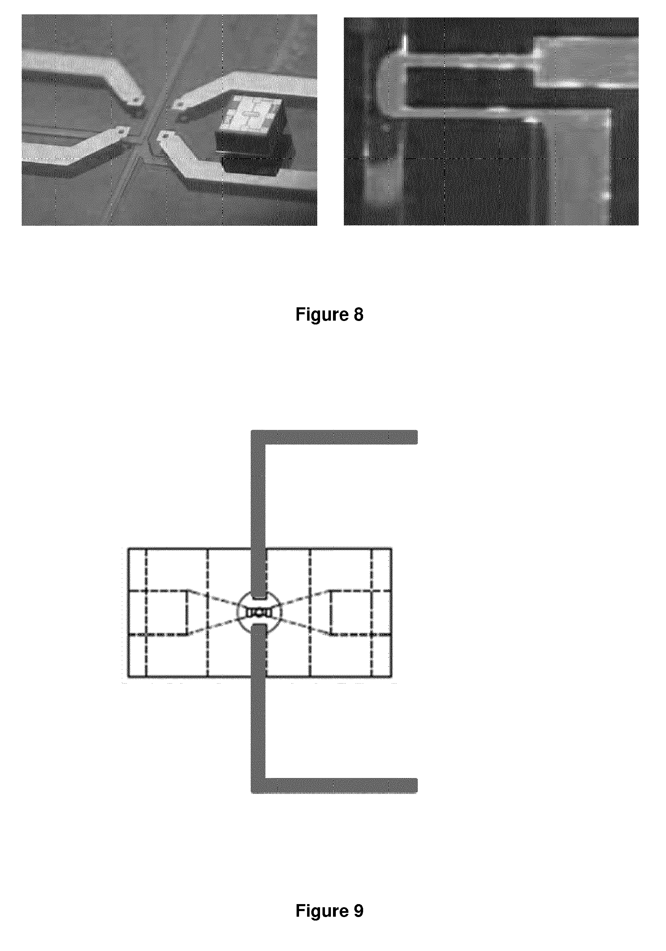

Figure 8 illustrates i) flip-chip integration of photodiode over a micro-channel, and ii) camera imaging of fluorescent buffer liquid in a 5 micron deep etched silicon micro-channel. Both micro-channels are sealed with a glass (Pyrex) superstrate.

Figure 9 illustrates integration of the optical detection system onto the polymer injector chip. An alternative way of detecting the presence of the sample in the microchannel is to illuminate the channel at the point of interest for injection. The transmitted light will be collected by an optical detector (optical fibre). As the buffer liquid passes with the sample the interface between the two is detected, causing switching of valves and the injection of the sample into the separation column.

In the specification the terms "comprise, comprises, comprised and comprising" or any variation thereof and the terms include, includes, included and including" or any variation thereof are considered to be totally interchangeable and they should all be afforded the widest possible interpretation and vice versa.

The invention is not limited to the embodiments hereinbefore described but may be varied in both construction and detail.

## Claims

1. An optofluidic system for detecting properties of a sample fluid comprising
at least one channel adapted to deliver a sample fluid into a micro separation system;
a micro-injector for controlling delivery of the sample fluid; **characterised in that** the micro-injector is configured to provide a buffer fluid either side of the sample fluid; and
a sensor to detect the start and/or end of the sample fluid in the channel.

2. The system of claim 1 wherein the sensor comprises an optical detection system.

3. The system of claims 1 or 2 wherein the sensor determines the location of the sample fluid in the channel.

4. The system of any preceding claim wherein the buffer fluid comprises an immiscible fluid.

5. The system of claim 4 wherein the immiscible fluid comprises a different refractive index to the sample fluid.

6. The system of claim 4 wherein the immiscible fluid comprises a different colour or fluorescence to the sample fluid to facilitate identification of at least one end of the sample fluid.

7. The system of any preceding claim wherein the micro separation system comprises a second channel and arranged in a cross-tee configuration with the at least first channel.

8. The system of claim 7 wherein the sensor detects when the sample fluid is position in the cross-tee section indicating that the sample fluid can be delivered into the micro separation system.

9. The system of any preceding claim wherein the micro-injector comprises a silicon or substrate and a transparent glass superstrate.

10. The system of claim 9 wherein the superstrate is optically transparent adapted to facilitate visualisation of the liquid within the channel.

11. The system of any preceding claim wherein the channel comprises a micro-channel.

12. The system of any preceding claim wherein the micro-injector component is comprises a substrate with a plurality of micro-channels of etched silicon and a transparent superstrate.
